# EUROPÄISCHE PATENTANMELDUNG

(11) **EP 0 855 841 A2**
(43) Veröffentlichungstag der Anmeldung: **29.07.1998**
(21) Anmeldenummer: 98100337.9
(22) Anmeldetag: 10.01.1998
(51) Int. Cl.: H04N 9/28

(54) **Schaltung zur Einstellung der Konvergenz bei einem Projektionsfernsehgerät**

(30) Priorität: 24.01.1997 DE 19702452
(71) Anmelder: DEUTSCHE THOMSON-BRANDT GMBH, 78048 Villingen-Schwenningen (DE)
(72) Erfinder: Chauvin, Jacques, 78087 Mönchweiler (DE); Runtze, Albert, 78052 Villingen-Schwenningen (DE); Malota, Bernhard, 78087 Mönchweiler (DE)
(74) Vertreter: Wördemann, Hermes, Dipl.-Ing.

(57) **Abstract**

For convergence setting, a projection television set contains photosensors (S) for the primary colours R, G, B which supply an output signal (U1) in the event of impingement of a marker (M) contained in the projected picture. The time characteristic of the output signal of the sensor while the marker sweeps over is significantly steeper and shorter for the colour blue than that for the colours green and red. This reduces the complexity of the evaluation circuit.

An integrating element lies in the path of the output signal (U1B) of the sensor (S) for the colour blue and is dimensioned in such a way that the time characteristic of the output signal of the sensor (S) for the colour blue is approximately equal to the time characteristic of the output signals (U1RG) for the colours red and green. As a result, the time characteristic becomes identical for the signals of all three sensors and the circuit is simplified.

In particular for a projection television set with convergence setting using a plurality of sensors.

## Beschreibung

The invention is based on a circuit for convergence setting in a projection television set according to the preamble of Claim 1.

A projection television set contains three monochrome picture tubes for the primary colours red, green, blue, which each project a picture in its colour onto a screen. The three pictures are superposed on the screen and together produce a colour picture. For satisfactory picture reproduction, the three pictures projected onto the screen must be brought exactly into congruence, i.e. converge. Additional deflection circuits and correction coils for the horizontal direction and the vertical direction and for the colours R, G, B are used in convergence setting. The correction currents for the convergence are taken from digital memories in which correction values for the pixels are stored.

When such devices are manufactured, use is made of a large number of photosensors inside or outside the visible picture area during convergence adjustment. The projected picture of each of the three tubes contains so-called markers in the form of monochrome red, green or blue picture locations. For satisfactory convergence, these markers in the projected picture must impinge exactly on the assigned sensor. This means that a manipulated variable which indicates the two conceivable states "no light on the sensor" and "light on the sensor" has to be obtained from the output signal of each sensor. It has been shown that the time characteristic of the output signal of a sensor during impingement of the marker varies on account of different persistence of the individual phosphors for red, green and blue. In particular, during the impingement of the marker on the sensor, the sensor for the colour blue supplies a significantly shorter and steeper output signal having a higher amplitude in comparison with the sensors for green and red. This means that different evaluation circuits have to be provided for the output signals of the individual sensors or a common evaluation circuit must be switched over between the individual primary colours R, G, B. This necessity increases the circuitry for evaluating the output signals of the sensors.

The invention is based on the object of simplifying the overall circuit for evaluating the output signals of the individual sensors and of ensuring correct detection of the presence of light, i.e. of the impingement of the marker on the sensor. This object is achieved by means of the invention specified in Claim 1. Advantageous designs and developments of the invention are specified in the subclaims.

The invention consequently consists in the fact that an integrating element lies in the path of the output signal of the sensor for the colour blue and is dimensioned in such a way that the time characteristic of the output signal of the sensor for the colour blue is approximately equal to that of the output signals for the colours red and green.

In the solution according to the invention, then, the output signals of the three sensors for the primary colours R, G, B are brought in a simple manner to approximately the same waveform, i.e. the same time characteristic during the impingement of the marker on the sensor. This affords the advantage that the output signals of the sensors can be analysed and processed in the same way. This simplifies the overall circuit because the same circuits can be used for the three primary colours or else the output signals for the three primary colours can be processed using the same circuit given sequential evaluation of the colour signals.

In a development of the invention, circuit means for suppressing the DC voltage component are in each case provided in the path of the output signal of a sensor, only the AC voltage component of the signal being evaluated in the circuit for evaluating the output signal of a sensor. As a result of this solution, signal components in the output signal of the sensors on account of continuous or ambient light which negatively influence the evaluation of the signals are eliminated.

In another development of the invention, the output signal of the sensor is applied to the input of a monostable multivibrator, the duration of whose period is somewhat longer than the duration of a field. The output signal of the monostable multivibrator is sampled repeatedly during the duration of a frame and a manipulated variable indicating light is generated only when the output signal of the monostable multivibrator has the value "1" for "light on the sensor" for the duration of two or more frames. This solution prevents interference pulses which occur only momentarily in a picture from triggering the circuit and emitting an output voltage which indicates a marker that is not present.

In a further embodiment of the invention, a plurality or all of the sensors are connected in parallel. This simplifies the circuit and the wiring. The number of sensors connected in parallel is limited only by the capacitance added by each sensor in the circuit. If the number of sensors is relatively large, the sensors can also be divided into groups each having a number of parallel sensors. The sensor signals then all appear on a line and are fed sequentially by changeover switches to the separate evaluation circuits for the primary colours.

The invention is explained below using an exemplary embodiment with reference to the drawing, in which
Figure 1 shows the fundamental structure of the projection television set,
Figure 2 shows a basic block diagram of the method of operation of the convergence correction,
Figures 3-5 show characteristics of the output signals of the sensors with and without application of the invention,
Figures 6, 7 show a design example for the embodiment with continuous-light suppression,
Figure 8 shows an evaluation circuit with a monostable multivibrator for an interference pulse,
Figure 9 shows the solution according to Figure 8 for a useful pulse, and
Figure 10 shows a simplified block diagram of the convergence correction circuit according to the invention.

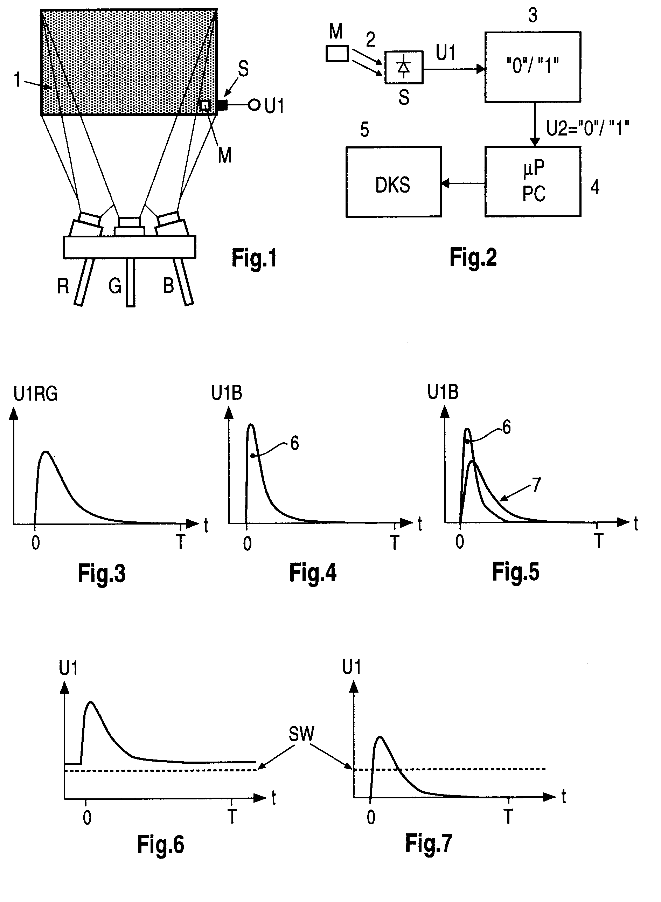

Figure 1 shows the structure of a projection television set in a simplified form. Three monochrome picture tubes project three pictures for the primary colours R, G, B onto the screen 1, where they are superposed in order to display a colour picture. For superposition of this type, the convergence of the three projected pictures must be correct, i.e. mutually corresponding parts of the three pictures must coincide at every point of the picture on the screen. In order to set the correct convergence, a stationary sensor S in the form of a photodiode is assigned to the screen 1 inside or outside the visible picture area. The picture projected onto the screen 1 contains a respective marker M in the form of a monochrome, that is to say red, green or blue, picture location within a picture area that is black in the setting region of the marker M. For satisfactory convergence, the marker M must impinge on the sensor S. This impingement is detected by the fact that when the marker M sweeps over the sensor S, the latter emits an output signal U = "1" = "light" via an evaluation circuit. If the marker M is situated outside the sensor S, the sensor S emits the output signal U = "0" = "dark".

Figure 2 shows the structure of a convergence correction circuit in a simplified form. The marker M, when sweeping over the sensor S, transmits light 2 onto the sensor S. The output signal U1 of the sensor S passes to the detection circuit 3, which evaluates the output voltage U1 and from it derives a binary output signal U2, namely U2 = "0" = "no light or dark", i.e. the marker M does not impinge on the sensor S, and U2 = "1" = "light", i.e. the marker M impinges on the sensor S. The binary output signal from the output of the circuit 3 passes to the microprocessor or personal computer 4, which evaluates the binary signal U2 and forwards it to the digital convergence circuit (DKS) 5. The circuit 5 operates in such a way that digital values for the convergence are stored for the individual frames and are used for convergence setting during reproduction after digital/analogue conversion.

Figure 3 shows the time characteristic of the output signal U1RG of the sensor S while the marker M sweeps over the sensor S, to be precise for the colours red and green. The time characteristic of U1 is approximately identical for these two colours. T designates the duration of a picture during deflection.

Figure 4 shows the time characteristic of U1B for the colour blue. Compared with red and green, the characteristic of U1B for the colour blue has a significantly higher amplitude and a significantly shorter duration than U1RG. The pulse U1B at the output of the sensor S is therefore significantly steeper, shorter and larger.

According to Figure 5, the pulse 6 is then converted by integration into the pulse 7, which, to the greatest possible extent, corresponds to the characteristic of U1RG in Figure 3. The output signals of the sensors for red, green and blue then have, to the greatest possible extent, the same time characteristic, with the result that these pulses can be evaluated using identical circuits or else using the same circuit.

In Figure 6, the characteristic of the output signal U1 has an appreciable DC voltage component on account of ambient light that is generally present. Evaluation of this signal at the threshold value SW would then be impossible, since U1 always lies above the threshold value SW on account of the DC voltage component.

In Figure 7, the DC voltage component caused by continuous light is eliminated by AC voltage coupling or other circuit measures. The result of this is that the output signal U1 can be evaluated at the threshold value SW. For example, a positive pulse is generated as long as U1 lies above the threshold value SW.

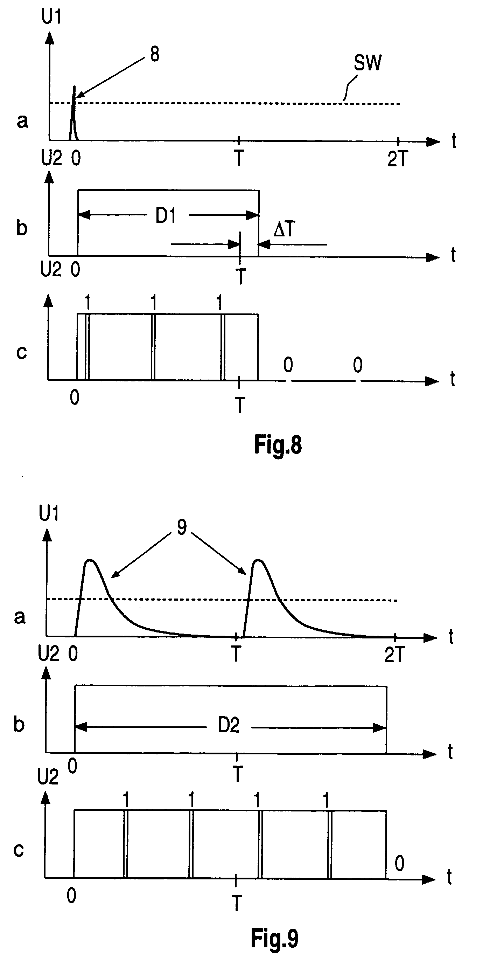

Figure 8 shows the method of operation of a circuit for evaluating the output signal U1 of the sensor S for an interference pulse 8. The interference pulse 8 passes to the input of a monostable circuit which, on account of the pulse 8, generates an output pulse U2 having the duration D1, which is somewhat longer than the duration T of a frame. According to Figure 8c, this output signal U2 is sampled at equidistant values, as is illustrated by the "1" in each case. In this case, the monostable circuit supplies only three samples because the pulse U2 has ended at the next, that is to say fourth, sampling. The evaluation circuit is dimensioned in such a way that it responds only in the event of a number of more than three samples, that is to say more than three times U2 = 1. Since the one-off triggering of the monostable circuit by the interference pulse 8, which occurs only once, supplies only three samples "1", the interference pulse 8 is consequently suppressed and does not generate an output signal which indicates the impingement of a marker M on a sensor S.

Figure 9 shows the same conditions for a useful pulse 9, which is triggered by the impingement of the marker M on the sensor S and is therefore repeated with the period T. Before the output voltage U2 of the monostable circuit can be reset after the duration D1 as in Figure 8b, it is set anew by the second pulse 9 and therefore assumes the longer duration D2 according to Figure 9b. The equidistant sampling, performed as in Figure 8c, of the pulse U2 according to Figure 9c now produces four samples, in other words more than three. The circuit recognises from this that what is involved is a useful pulse on account of a marker M, and feeds this pulse to the further evaluation circuit. In this way, therefore, an interference pulse 8 can be identified and suppressed and equally a useful pulse 9 can be identified and evaluated.

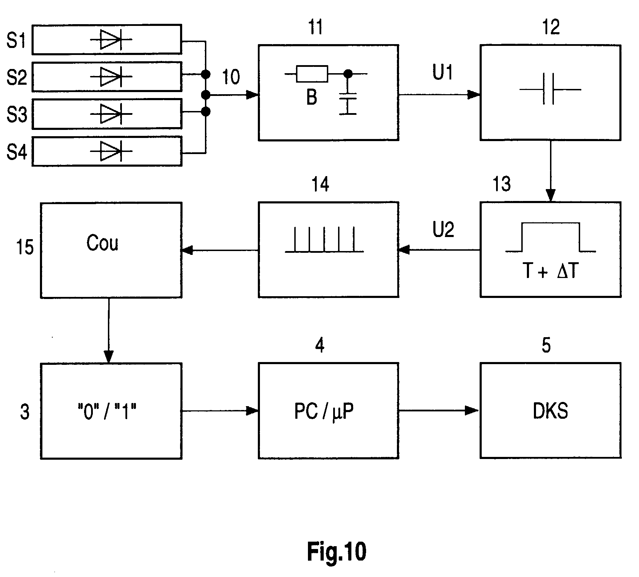

Figure 10 shows a simplified block diagram for the evaluation according to Figures 8 and 9. Four sensors S1 - S4 are connected in parallel and supply sequential pulses, triggered by the markers, on the line 10. The integration of the output signal U1 from the sensor S for the blue picture in accordance with Figure 5 is effected in the circuit 11. In the circuit 12, the DC voltage component dc of the signal from the output of the circuit 11 is suppressed and only the AC voltage component is evaluated, as explained in Figures 6 and 7. The evaluation in accordance with Figures 8 and 9 is effected in the monostable circuit 13 with the toggle duration T + ΔT. The output signal U2 of the monostable circuit 13 is sampled in accordance with Figures 8c and 9c in the sampling circuit 14. The counter (Cou) 15 counts the number of samples "1" in accordance with Figures 8c and 9c. The circuit 3 makes the binary decision "0" = "dark", no marker impinges on the sensor and "1" = "light" = marker impinges more or less on the sensor.

The personal computer or microprocessor 4 processes these signals using a correction algorithm. The output signal of the circuit 4 controls the digital convergence circuit 5.

## Claims

1. Circuit for convergence setting in a projection television set, having photosensors (S) for the primary colours R, G, B which, in the event of impingement of a marker (M) contained in the projected picture, supply an output signal (U1) having a specific time characteristic, characterized in that an integrating element lies in the path of the output signal (U1B) of the sensor (S) for the colour blue and is dimensioned in such a way that the time characteristic of the output signal of the sensor (S) for the colour blue is approximately equal to the time characteristic of the output signals for the colours red and green.

2. Circuit according to Claim 1, characterized in that circuit means (12) for suppressing the DC voltage component are provided in the path of the output signal (U1) of a sensor (S).

3. Circuit according to Claim 1, characterized in that only the AC voltage component of the signal is evaluated in the circuit for evaluating the output signal (U1) of a sensor (S).

4. Circuit according to Claim 1, characterized in that the output signal (U1) of the sensor (S) is applied to the input of a monostable multivibrator (13), the duration of whose period (T + ΔT) is somewhat longer than the duration (T) of a frame.

5. Circuit according to Claim 5, characterized in that the output signal (U2) of the monostable multivibrator is sampled repeatedly during the duration (T) of a frame and a manipulated variable which indicates light is generated only when the output signal (U2) of the monostable multivibrator has the value "1" for the duration of two or more frames.

6. Circuit according to Claim 1, characterized in that a plurality or all of the sensors (S1 - S4) are connected in parallel.
